# EUROPEAN PATENT APPLICATION

(11) **EP 2 848 486 A1**
(43) Date of publication of application: **18.03.2015**
(21) Application number: 13849228.5
(22) Date of filing: 27.06.2013
(51) Int. Cl.: B60W 40/02, B60R 21/00, H04N 7/18

(54) **DEVICE AND METHOD FOR PRODUCING BIRD'S EYE VIEW HAVING FUNCTION OF AUTOMATICALLY CORRECTING IMAGE**

(30) Priority: 24.10.2012 KR 20120118263
(71) Applicant: Sekonix Co., Ltd., Dongducheon-si, Gyeonggi-do 483-100 (KR)
(72) Inventor: LEE, Hee Joong, Goyang-si Gyeonggi-do 412-270 (KR); KWON, Rakbeom, Incheon 405-220 (KR)
(74) Representative: Chaillot, Geneviève
(86) International application number: PCT/KR2013/005735
(87) International publication number: WO 2014/065485

(57) **Abstract**

The present invention discloses a bird's-eye view image-producing device having a function of automatically calibrating an image. The bird's-eye view image-producing device automatically corrects a change in camera location due to a passenger getting into an automobile even if a driver does not perform a separate calibration step to produce the bird's-eye view image. The bird's-eye view image-producing device may include: a first camera and a second camera for taking images of perimeters of a vehicle to generate a first image and a second image, a tilt calibrating unit for calibrating a tilt of the first camera caused by the passenger's weight, by comparing an image acquired through the first camera when the vehicle starts with a reference image for the first camera taken before a passenger has gotten into the vehicle; and a bird's-eye view image producing unit for producing a bird's-eye view image having a perspective that views the perimeter of the vehicle from an upper part of the vehicle by combining a first image with the second image, the first image being taken by the first camera that is calibrated with regard to the tilt.

## Description

### BACKGROUND OF THE INVENTION

### 1. Field of the Invention

The present invention relates, generally, to a device and a method for producing a bird's-eye view and, more particularly, to a device and a method for producing a bird's-eye view image, the device having an automatic image calibrating function to automatically correct a camera location error occurring by the number and the position of passengers in a vehicle.

### 2. Description of the Related Art

A bird's-eye view image originates from a parking assistance apparatus and a parking assistance method disclosed in PCT application No. WO2009 151053 by Nissan, to park a vehicle safely. The bird's-eye view image is characterized by an overhead view with a perspective as though an observer were overlooking a vehicle from a position above the vehicle and displaying it on a screen of a navigator or other devices. Such bird's-eye view images are used for assisting inexperienced drivers to safely park their vehicle.

The parking assistance system and method disclosed in WO2009 151053 is involved in joining images respectively captured in front of, on right and left sides of, and at the back of a vehicle to generate one panoramic-like image, and converting the image using image processing to produce an overhead view that seems to have been taken from above the vehicle. However, when passengers get in the vehicle, an imaging position of cameras disposed at the front, left, right, and back of the vehicle is changed, thus causing the whole overhead view to have a low degree of accuracy because of the change of the imaging position of the cameras.

For example, when only a driver gets in a vehicle, the vehicle tilts forward and to the left and the imaging position of the camera next to the driver's seat is lowered to the ground. Consequently, when images taken from the front, right, left and back of the vehicle are joined, the image taken next to the driver's seat disrupts the balance of the overhead view causing a decrease in quality of the view.

### SUMMARY OF THE INVENTION

Accordingly, the present invention has been made keeping in mind the above problems, and an object of the present invention is to provide a device and a method for producing a bird's-eye view image having an automatic image calibrating function to automatically correct a change in camera location due to passengers who entered a vehicle when a driver starts the vehicle.

In order to accomplish the above object, the present invention provides a bird's-eye view image-producing device that includes a first camera and a second camera for taking images of perimeters of a vehicle to generate a first image and a second image, respectively; a tilt calibrating unit for calibrating a tilt of the first camera caused by a passenger, by comparing a reference image for the first camera taken before the passenger gets in the vehicle with an image acquired through the first camera when the vehicle starts; and a bird's-eye view image producing unit for producing a birds'-eye view image having a perspective that views the perimeter of the vehicle from an upper part of the vehicle, by combining the second image with the first image taken by the first camera that is calibrated with regard to the tilt.

Also, according to the present invention, the above object is implemented by a bird-eye's view image-producing device configured to produce a bird's-eye view image based on a first and a second image taken of a perimeter of a vehicle by a first and a second camera, respectively, and is accomplished by processes of acquiring a comparative image from the first camera when a vehicle starts, comparing the comparative image with a reference image taken by the first camera in which no passenger has gotten into the vehicle, calibrating the first image taken by the first camera, by revising a deviation between the reference image and the comparative image, and producing a bird's-eye view image by combining the second image with the calibrated first image.

### EFFECT OF THE INVENITON

According to the present invention, a bird's-eye view image-producing device may automatically correct a change in camera location due to a passenger even if a driver does not perform a separate calibration when producing the bird's-eye view image.

### BREIF DESCRIPTION OF THE DRAWINGS

FIG. 1 is a reference view to describe a tilt occurring in a vehicle.
FIG. 2 is a conceptual view for a method for calibrating a boarding tilt in a bird's-eye view image-producing device that has the function of automatically calibrating an image.
FIG. 3 is a reference view to describe image distortion caused by a boarding tilt according to a vehicle inclining to one side.
FIG. 4 is a conceptual block diagram according to an embodiment of a bird's-eye view calibrating device.
FIG. 5 is a reference view about a method to calibrate a tilt of an image in a tilt calibrating unit.
FIG. 6 is a flow diagram of an automatic calibrating method for a bird's-eye view image according to an embodiment of the present invention.
FIG. 7 is a conceptual view for a method to calibrate a boarding tilt according to an embodiment of the present invention.

### DESCRIPTION OF THE PREFERRED EMBODIMENTS

A bird's-eye view image mentioned in the present application refers to a bird's-eye view image of a vehicle from above the vehicle, which is produced by joining images taken by cameras installed around the vehicle into one image and processing the image.

A camera referred to in the present application is a wide-angle camera, and it may mean that an angle of view of the camera is more than 80 degrees. The camera for producing a bird's-eye view image, mentioned in the present application, is a wide-angle camera and the angle of view is in a range from 120 to 190 degrees, but the angle of view can be more or less than that.

A boarding tilt mentioned in the present application may be a tilt, depending on the number and the position of passengers in the vehicle, recognized when looking at a vehicle from the front or side.

For example, when passengers only get in the front seats of a vehicle, a front tilt is caused as the vehicle slants forward. In other words, when the back of the vehicle is higher than the front, it can be referred to a front tilt.

When passengers only get in the driver's seat and the driver's side back seat, the vehicle tilts to the direction of the driver's side. If the driver's seat is located on the left side of the vehicle, it can be referred to a left tilt.

A horizontal adjustment mentioned in the present application may be horizontal adjustment of a basic line of an image taken by each wide-angle camera. The basic line may be a line to indicate the direction of the image taken by each wide-angle camera, and the horizontal adjustment can be processed into images taken by a front view camera or a rear view camera.

Hereinafter, referring to the drawings, the present invention will be described in more detail.

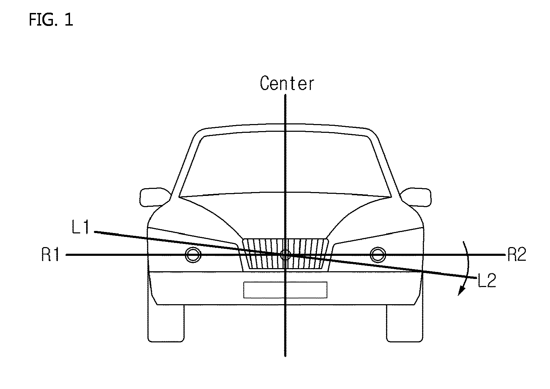

FIG. 1 shows a reference view to describe a tilt occurred in a vehicle.

Referring to FIG. 1, when there is no passenger in a vehicle, the vehicle keeps its horizontal balance between its left and right side with a line for center of gravity. At this time, R1 and R2 make a horizontal line perpendicular to the line for the center of gravity. Wide-angle cameras for producing a bird's-eye view image can be disposed respectively in the front, back, and at the sides of the vehicle, for example on a pair of side mirrors on the vehicle. Generally, a vehicle has four wide-angle cameras and these cameras have factory default settings assuming that the front and the back, and the left and the right of the vehicle respectively maintain a horizontal balance.

Meanwhile, when all seats in the vehicle (two seats in front, two seats at back) are occupied by passengers, the whole vehicle is lowered to the ground and thus the range of the bird's-eye view image taken by the wide-angle cameras decreases in extent but the bird's-eye view image is not distorted. On the other hand, when passengers only get in the driver's seat and the driver's side back seat, the vehicle tilts to the direction of the driver's side with the line for the center of gravity (center) and two cameras of the four wide-angle cameras for producing a bird's-eye view image tilted to the direction of the driver's side. That means a problem occurs with two images among the four images taken by the four wide-angle cameras. Consequently, when a bird's-eye view image is produced using the images taken by the two wide-angle cameras with problems, the whole bird's-eye view image can be distorted.

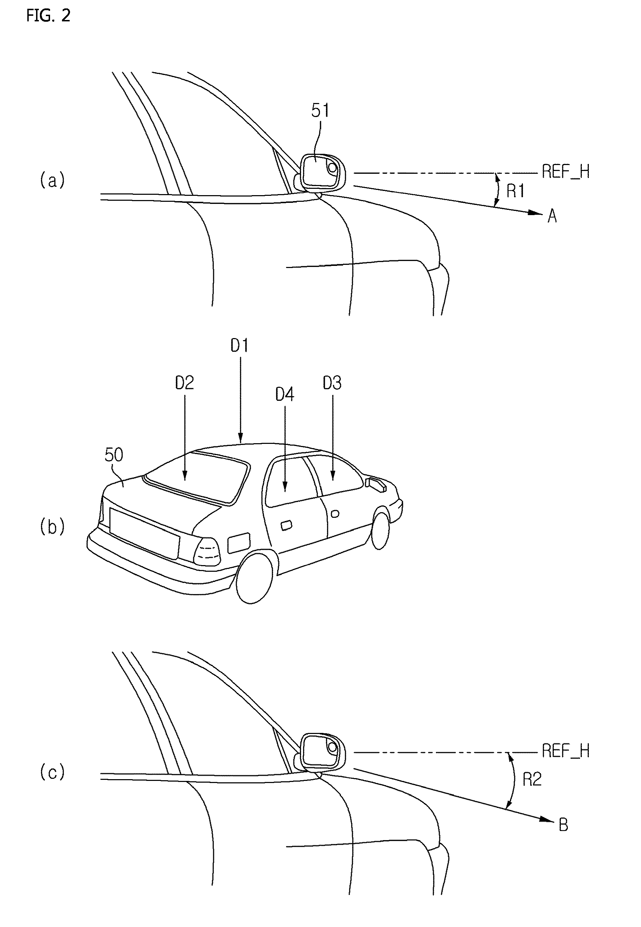

According to the distribution of the passengers, the vehicle may tilt forward, backward, to the direction of the driver's seat, or to the direction of the front passenger's seat of the vehicle. A tilt caused by the number, position, and distribution of the passengers on board, is called boarding tilt, and the present invention involves calibrating boarding tilt automatically with the start of the vehicle without manual calibration by the driver. Referring to FIGS. 2-7, it will hereinafter be described.

FIG. 2 is a conceptual view for a method to calibrate a boarding tilt in a bird's-eye view image-producing device (hereinafter specified as a bird's-eye view calibrating device) that has the function of automatically calibrating an image.

Referring to FIG. 2, depending on the position of the passenger in a vehicle 50, the vehicle may slant to one direction among D1, D2, D3, and D4. FIG. 2 (a) depicts the imaging direction A of the wide-angle camera 51 on the side mirror of the vehicle 50 when no passenger is in the vehicle 50, and FIG. 2 (c) depicts the imaging direction B of the wide-angle camera 51 when passengers get in the front passenger's seat and front passenger's side back seat of the vehicle 50 and a boarding tilt is caused to the direction of the front passenger's side. When passengers get in the front passenger's seat and front passenger's side back seat, the vehicle can tilt to the right side and the direction B of the wide-angle camera 51 can slant more to the ground compared to FIG. 2 (a). At this time, a wide-angle camera next to the driver's seat points upward, to the opposite direction of the ground as much as the direction of the front passenger's seat slants to the ground, and thus the bird's-eye view image produced by the images taken by the wide-angle cameras on the vehicle 50 can be distorted.

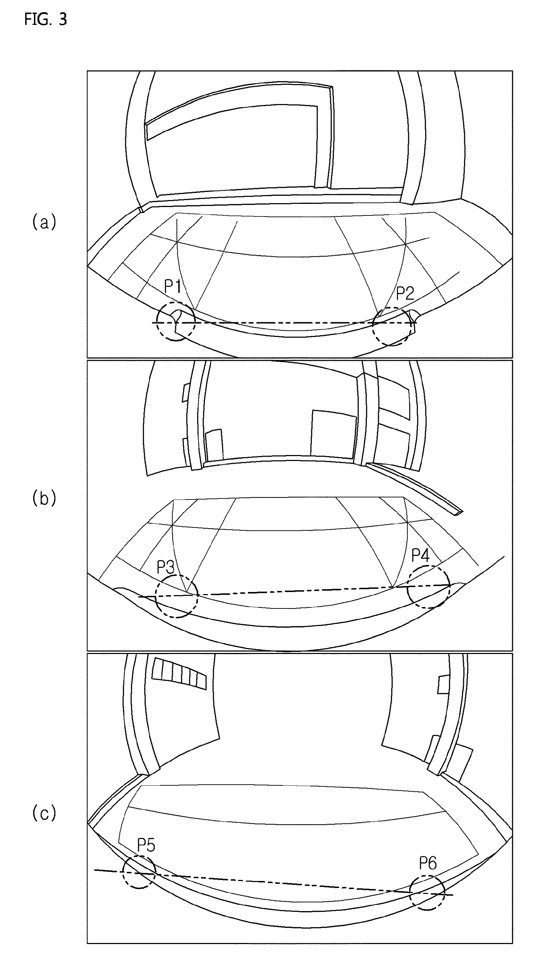

FIG. 3 is a reference view to describe image distortion caused by a boarding tilt according to a vehicle inclining to one side.

Referring to FIG. 3, FIG. 3 (a) is an image taken of a bonnet of the vehicle and shows one example that the horizontality of the image taken by a wide-angle camera is correct.

The camera taking the front view of the vehicle in FIG. 3 (a) can be disposed on the bonnet or in the driver's seat, and the wide-angle camera can take a longitudinal section of the bonnet. As the left and right side of the taken image form curvature of field with the center, the whole image is similar to the image taken by a fisheye lens.

Because the image taken by the wide-angle camera in FIG. 3 (a) is a wide-angle image, it forms a curvature of field, that is, the center area of it is caved in to the inside while the left and right direction of it are projected to the upper side. Nevertheless, the line connecting a reference point P1 with a reference point P2 remains horizontally parallel to the width direction of the image.

FIG. 3 (b) shows an image in the case where a driver's seat is lowered to the ground because of a boarding tilt. Referring to FIG. 3 (b), a reference point P3 is lower than a reference point P4, and it indicates that the wide-angle camera taking the front view of the vehicle has a tilt to the direction of the reference point P3.

FIG. 3 (c) shows an image when a front passenger's seat is lowered to the ground because of a boarding tilt to the front passenger's seat. Referring to FIG. 3 (c), a reference point P5 is higher than a reference point P6 and the reference point P6 is inclined to the direction of the ground. That is, as a heavy passenger gets in the front passenger's seat or passengers ride in the front passenger's seat and the front passenger's side back seat, the center of gravity of the whole vehicle moves toward the direction of the passenger's side.

If the front view image depicted in FIG. 3 (b) or (c) is connected to the left and right side view image and the rear view image of the vehicle, the whole image is distorted, and the bird's-eye view image that is produced by image processing of the connected image is also distorted.

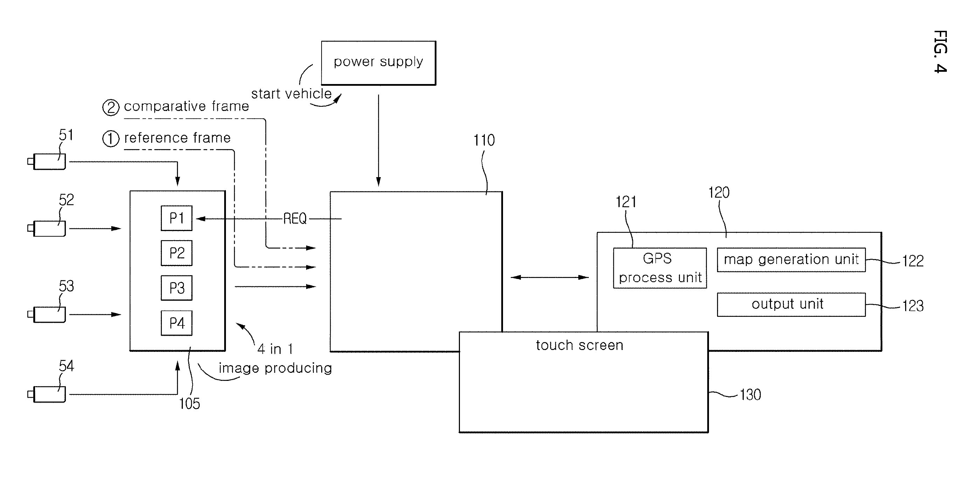

FIG. 4 is a conceptual block diagram according to an embodiment of a bird's-eye view calibrating device.

Referring to FIG. 4, the bird's-eye view calibrating device may include wide-angle cameras 51-54 for taking an image of the front view, rear view, left side view, and right side view of the vehicle, a bird's-eye view image producing unit 105, a tilt calibrating unit 110, a navigation unit 120, and a touch screen 130.

The wide-angle cameras 51-54 have an angle of view in a range from 120 to 190 degrees and the respective wide-angle cameras 51-54 can be disposed in front of, at the back of, and on both sides of the vehicle. Desirably, the wide-angle camera in front of the vehicle 51 can be disposed on a bonnet to look at the outside of the vehicle or from inside of the vehicle, and can take an outline of the bonnet of the vehicle. Here, the outline of the bonnet may indicate an outline to the front direction among the outermost edges of the bonnet.

If the images taken by the side view wide-angle cameras of the vehicle (the wide-angle cameras on left and right side of the vehicle) 52, 53 and the image taken by the rear view camera 54 of the vehicle are joined to the image taken by the front view wide-angle camera 51, the images taken by the respective wide-angle cameras may have a mutually overlapping section. The overlapping section can be used to combine the images taken by the respective wide-angle cameras 51-54, to produce a bird's-eye view image with a 360-degree view positioning the vehicle at the center.

Additionally, the overlapping section can be used to calibrate the edge of the image of the adjacent wide-angle camera. For example, when combining the image taken by the front view wide-angle camera 51 with the image taken by the left side view wide-angle camera 52, the bird's-eye view image producing unit 105 connects the pattern and the color of the overlapped images with each other thus producing a bird's-eye view in a complete form.

The images taken by the respective wide-angle cameras 51-54 are provided to a bird's-eye view image producing unit 105, and the bird's-eye view image producing unit 105 connects the images of the respective wide-angle cameras 51-54 by frames and produces a 360 degrees bird's-eye view image with a virtual view of the vehicle as the center. The bird's-eye view image can be obtained by the processes of connecting the images by the respective wide-angle cameras 51-54, partitioning each section of the image to the coordinate system in a lattice form, setting a viewpoint of each coordinate system as the upper side of the vehicle, and converting the connected image to match with the viewpoint.

A tilt calibrating unit 110 can be reset when a vehicle starts, and acquires an image for comparison by sending a request to the bird's-eye view image producing unit 105.

When a vehicle comes out of the factory the tilt calibrating unit 110 can acquire a reference image of the vehicle's initial state, or it can be established by the vehicle driver. It is desirable to get the reference image in a state in which there is no load in the vehicle, and the reference image can be a static image acquired by the wide-angle cameras 51-54 that point to one direction among the front, left, right or back sides of the vehicle.

The tilt calibrating unit 110 has a reference image that is acquired when the vehicle comes out of the factory or has a reference image set by the driver. When the vehicle is started, the tilt calibrating unit 110 asks the bird's-eye view image producing unit 105 for a comparative image and acquires it, and compares it with the reference image and thus can calibrate the boarding tilt.

A comparative image in the present application is described on the basis of the image of the wide-angle camera that points to the front view of a vehicle, but it can also be an image to the left and right side view or the rear view of the vehicle.

The image taken by the wide-angle cameras 51-54 is distorted according to the number and position of passengers in a vehicle. Especially when a bird's-eye view image is produced by combining the images taken by four wide-angle cameras 51-54, if the vehicle tilts to a certain direction of among the front, left, right, or back of the vehicle, one image of the four images taken by the respective wide-angle cameras 51-54 is not matched with the others at the time of combining the images, and the bird's-eye view image that is produced by combining them, can be distorted.

If passengers get in the driver's seat and the front passenger's seat and the vehicle has boarding tilt to the front, the wide-angle camera disposed in front of the vehicle moves to the ground, and it takes an image of the lower part of the vehicle as it moves to the ground in comparison with the images taken by the other wide-angle cameras 52-54. If a bird's-eye view image is produced in this state, the image taken in front of the vehicle has a narrow range on the basis of the outline of the bonnet of the vehicle compared to the images taken by the other wide-angle cameras 52-54. Therefore, if a bird's-eye view image is produced using the image having a narrow range, calibration is required such that images taken by the other wide-angle cameras 52-54 match with the image of the front view wide-angle camera 51, which has taken the narrow range image.

Instead of the above calibrating method, the present applicant calibrates the image of the front wide-angle camera to match with a reference image, and for this calibration, acquires a comparative image whenever a vehicle is started, determines degree of deviation between the comparative image and the reference image by comparing the two images, provides information about the deviation to the bird's-eye view image producing unit 105, and makes the bird's-eye view image producing unit 105 carry out calibration of the tilt of the wide-angle camera 51. Consequently, the driver does not have to calibrate the tilt additionally, and the tilt of each wide-angle camera 51-54 is calibrated automatically according to the number and the position of the passengers in the vehicle and then the bird's-eye view image can be displayed in a complete form on the touch screen 130.

A navigation unit 120 comprises a GPS process unit 121 to acquire geo-location information, a map creation unit 122 to map the current location of a vehicle on the digital map, generate the path to the destination of the vehicle, and provide it to the touch screen 130, and a output unit 122 to output necessary voice information while the vehicle moves to the destination.

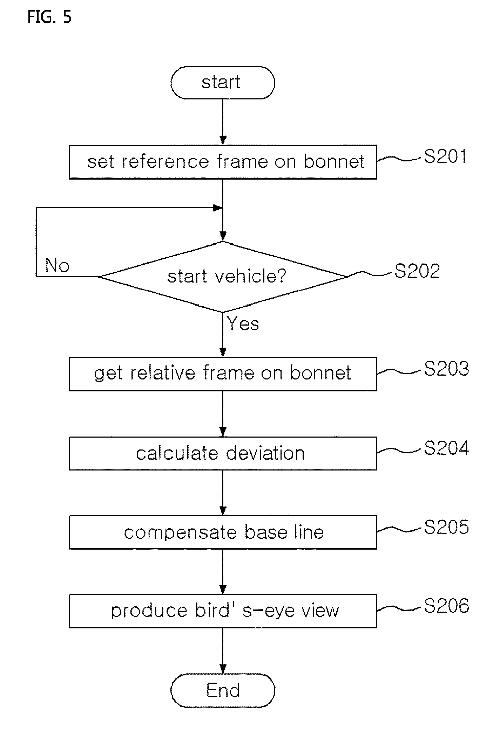

FIG. 5 is a reference view about a method to calibrate a tilt of an image in a tilt calibrating unit.

FIG. 5 shows one example of a program interface for camera adjustment by the present applicant, and the interface depicts the sample program in which the adjustment is processed by the developer. The program shown in FIG. 5 can be installed in the bird's-eye view image-producing device and implemented to calibrate a boarding tilt of the wide-angle cameras disposed in at the front, sides and the back of a vehicle when the vehicle starts. In this case, the user interface for the developer may not be installed.

Referring to FIG. 5, each wide-angle camera 51-54 has correction values for the position of front, right, back, and left, respectively.

On the interface shown above, each wide-angle camera 51-54 has options including a vehicle angle to the ground (inclination), a height of the camera installation (height), a shooting angle of the lens (Lenz Fov), a deflection angle between left and right side (Azimuth), and a horizontal angle (horizontal). If "+5" degrees is input to the deflection angle between left and right side (Azimuth), the front view wide-angle camera 51 deflects to the right as much as 5 degrees. In FIG. 5, the images taken by left and right side view cameras 52, 53 and the rear view camera 54 are lined up following the base line B, C, and D, respectively, to form a bird's-eye view image. However, the base line of the front view wide-angle camera whose deflection angle between left and right side (Azimuth) is set as 5 degrees, is formed following A and cannot form a rectangular shape with the base lines B, C, and D of the front view, sides view, and the rear view wide-camera 52-54. The base lines A, B, C, and D indicate the direction of the image taken by each wide-camera 51-54, respectively, and when they produce a rectangular form with the center of the image (it is the vehicle position), the whole bird's-eye view image can be formed.

In other words, when a vehicle tilts to the one side according to the number and position of passengers in a vehicle, the bird's-eye view calibrating device can compensate the tilt of the vehicle and form the base lines in a rectangular shape. That is, when the deviation is caused on the base lines A, B, C, or D by the tilt of the wide-angle cameras 51-54, the present invention compensates the tilt by setting a value for the tilt to the opposite direction to the tilt that occurred in the wide-angle cameras 51-54, and thus can produce an accurate bird's-eye view image in accordance with the tilt of the wide-angle cameras 51-54.

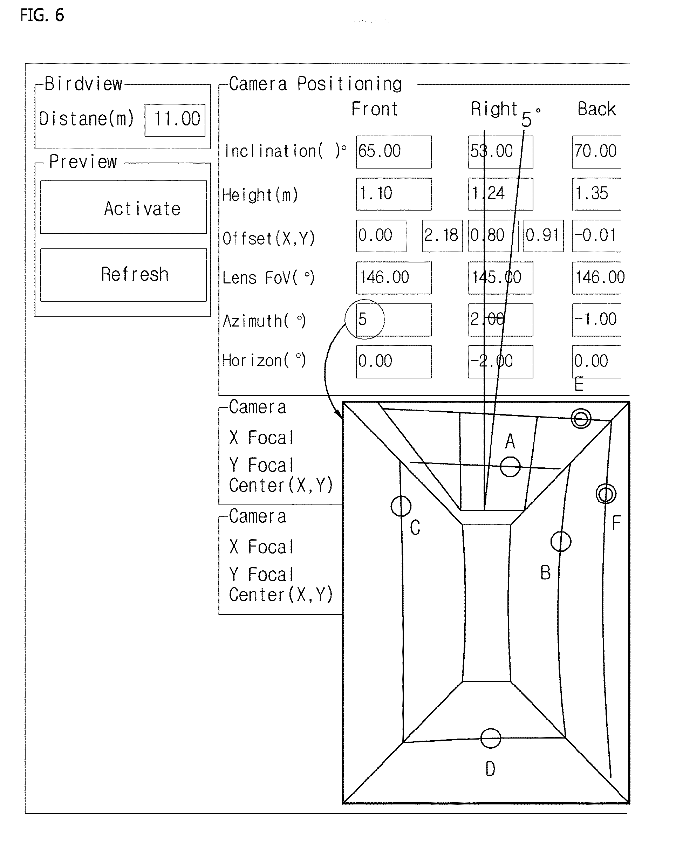

FIG. 6 is a flow diagram of an automatic calibrating method for a bird's-eye view image according to an embodiment of the present invention.

Referring to FIG. 6, when a vehicle comes out of the factory a reference image has been set in the bird's-eye view calibrating device, but a vehicle driver may set a reference frame on the vehicle individually (S201). Because this embodiment is described on the basis of the front view camera 51 of the vehicle, hereinafter, it will be described as the image of the bonnet in front of the vehicle.

Subsequently, the bird's-eye view calibrating device determines if the vehicle starts (S202). When the vehicle starts, in other words, when the direct current power from the vehicle is applied to the bird's-eye view calibrating device, the bird's-eye view calibrating device is reset and requests a comparative image to the bird's-eye view image producing unit 105 and acquires it (S203). Here, the comparative image can be the image for the longitudinal outline of the vehicle bonnet. Then, the bird's-eye view calibrating device compares the reference image of the bonnet with the comparative image acquired when the vehicle starts, and calculates the deviation between them (S204). The deviation may correspond to the deviation between left and right or between upside and downside, and it can be calculated to a length or an angle.

Next, the bird's-eye view calibrating device corrects the deviation between the reference image and the comparative image and revises the base lines described in FIG. 5 (S205). The revision of the base lines is processed in the bird's-eye view image producing unit 105 and the tilt calibrating unit 110 provides the bird's-eye view image producing unit 105 with the deviation between the reference image and the comparative image, that is, information about the length or the angle, to make the bird's-eye view image producing unit 105 process it.

Subsequently, after the boarding tilt of the front view camera 51 is calibrated, the bird's-eye view image producing unit 51 combines the images taken by the respective wide-angle cameras 51-54 and converts the image to an image with a perspective as if were taken overlooking the vehicle from above. This produces a bird's-eye view (S206), which is then displayed on the touch screen 130.

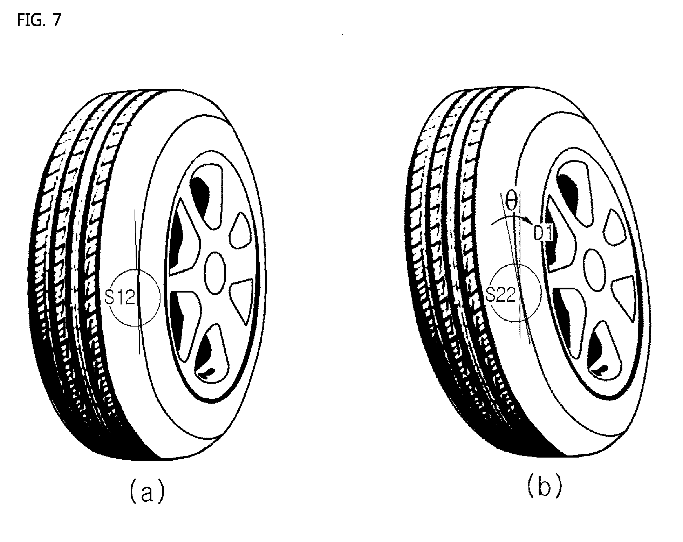

FIG. 7 is a conceptual view of a method for calibrating a boarding tilt according to an embodiment of the present invention.

Referring to FIG. 7, the method acquires a tire image before and after a passenger gets in the vehicle and calibrates a tilt by comparing the two images.

A tire has a symmetrical and nearly circular form by bearing the load of a vehicle equally before a passenger gets in the vehicle. FIG. 7 (a) is an example of the front right tire of the vehicle before a passenger gets in the vehicle, and the line in the region S12, is nearly perpendicular.

FIG. 7 (b) shows an example of the tire image taken by the right side view camera 53 in case that tilt occurs in the direction of the right side view camera 53 via boarding tilt after a passenger gets in the vehicle. Referring to FIG. 7 (b), the tire image shows that tilt occurs as θ degrees due to the boarding of the passenger, and the tilt should be calibrated as to θ degrees in the direction of D1. If the tire image like FIG. 7 (b) is taken after the vehicle starts, the tilt calibrating unit 110 compares a reference image taken before the passenger gets in the vehicle with the tire image (FIG. 7 (b)) taken by the right side view camera 53, and calibrates the tilt as θ degrees to direction D1. This calibration is carried out when the vehicle is started and the driver does not have to calibrate the tilt additionally, and as an automatic calibration of the tilt is carried out, it is possible to obtain a good quality bird's-eye view image without requiring tilt calibration by the driver.

### INDUSTRIAL APPLICATION

The present invention generates a good quality bird's-eye view image by a camera tilt calibration method using a vehicle body, and it can be used in the vehicle production industry or the in-vehicle imaging device industry.

## Claims

1. A bird's-eye view image-producing device having a function of automatically calibrating an image, comprising:
a first camera and a second camera for taking images of perimeters of a vehicle to generate a first image and a second image, respectively;
a tilt calibrating unit for calibrating a boarding tilt of the first camera by comparing a reference image with an image taken by the first camera when the vehicle starts, said reference image being taken from one part of the vehicle body before a passenger gets in the vehicle, and being stored in the tilt calibrating unit; and
a bird's-eye view image producing unit for producing a bird's-eye view image by combining a first image with the second image, said bird's-eye view image having a perspective that views the perimeter of the vehicle from an upper part of the vehicle, said the first image being taken by the first camera that is calibrated with regard to the tilt.

2. The bird's-eye view image-producing device of claim 1, wherein the first camera takes a front view of the vehicle.

3. The bird's-eye view image-producing device of claim 1, wherein the tilt calibrating unit calibrates a boarding tilt for the first image through a horizontal adjustment of an outline of a bonnet of the vehicle taken by the first camera

4. The bird's-eye view image-producing device of claim 1, wherein:
the first camera takes an image of a side view of the vehicle; and
the tilt calibrating unit calibrates the image of the side view of the first camera by comparing a tire outline of the vehicle taken by the first camera with a reference image taken in which no passenger has gotten in the vehicle.

5. The bird's-eye view image-producing device of claim 1, wherein:
the first camera takes an image of a rear view of the vehicle; and
the tilt calibrating unit calibrates the image of the rear view of the first camera by comparing a back bumper outline of the vehicle taken by the first camera with a reference image taken in which no passenger has gotten in the vehicle.

6. A method for automatically calibrating a bird's-eye view image, carried out using a bird's-eye view image-producing device configured to produce a bird's-eye view image based on a first and a second image taken of a perimeter of a vehicle by a first and a second camera, respectively, comprising:
acquiring a comparative image from the first camera when the vehicle starts;
comparing the comparative image with a reference image taken by the first camera in which no passenger has gotten into the vehicle;
calibrating the first image taken by the first camera, by revising a deviation between the reference image and the comparative image; and
producing a bird's-eye view image by combining the second image with the calibrated first image.

7. The method of claim 6, wherein the comparative image is taken after a passenger has gotten into the vehicle.

8. The method of claim 6, wherein the comparative image is an image taken of one selected from among a bonnet, a tire, and a back bumper of the vehicle.

9. The method of claim 8, wherein the step of calibrating the first image is carried out by a horizontal adjustment of an outline of one selected from among the bonnet, the tire, and the back bumper.
